# EUROPÄISCHE PATENTSCHRIFT

(11) **EP 1 535 720 B1**
(45) Veröffentlichungstag und Bekanntmachung des Hinweises auf die Patenterteilung: **11.04.2007**
(21) Anmeldenummer: 04024795.9
(22) Anmeldetag: 19.10.2004
(51) Int. Cl.: B29C 49/58, B29C 49/42, B29C 49/06, B29C 49/36, B29C 49/64, B29C 49/78

(54) **Vorrichtung zur Blasformung von Werkstücken**
Apparatus for blow moulding articles
Dispositif pour moulage par soufflage d' articles

(30) Priorität: 25.11.2003 DE 10355365
(43) Veröffentlichungstag der Anmeldung: 01.06.2005
(73) Patentinhaber: SIG Technology Ltd., 8212 Neuhausen Rhine Falls (CH)
(72) Erfinder: Litzenberg, Michael, 21502 Geesthacht (DE); Linke, Michael, 22926 Ahrensburg (DE)
(74) Vertreter: Klickow, Hans-Henning

(56) Entgegenhaltungen:
- EP-A- 0 333 096
- EP-A- 1 293 329
- US-A- 3 747 625
- US-A- 4 214 860
- US-A1- 2003 000 380
- US-A1- 2003 118 686

## Beschreibung

Die Erfindung betrifft eine Vorrichtung zur Blasformung von Behältern, die mindestens eine Blasstation mit einer Blasform aufweist, in die ein zu einem Behälter umformbarer Vorformling einsetzbar ist sowie die mit mindestens einem Ventil zur Steuerung einer Druckluftströmung sowie einem Anschlußelement zur Verbindung eines Innenraumes der umzuformenden Vorformlinge mit dem Ventil versehen ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Zur Steuerung einer Druckluftzufuhr bei der Umformung der Vorformlinge in die Behälter sowie zur Druckluftableitung nach einer ausreichenden Verfestigung der Behälter werden typischerweise Ventile verwendet. Verbreitet sind insbesondere magnetisch gesteuerte Ventile. Eine typische Anordnung besteht darin, daß alle verwendeten Ventile gemeinsam als ein Ventilblock neben der jeweils zugeordneten Blasstation angeordnet werden. Eine derartige Anordnung verhindert eine möglichst dichte Anordnung der Blasstationen. Bekannt ist es ebenfalls bereits, die Ventile in das Anschlußelement zu integrieren. Die Ventile werden hierzu seitlich in Ventilsitze eingebaut. Eine derartige Anordnung führt zwar zu relativ kurzen pneumatischen Schaltzeiten, da eine erhebliche Verkürzung der Leitungslängen realisiert wird, auch hier muß aber ein entsprechender Abstand zwischen den Blasstationen vorgesehen werden, um eine Montage sowie Demontage der Ventile zu ermöglichen.

Alle im Zusammenhang mit Blasstationen bislang bekannt gewordenen Ventilanordnungen weisen den Nachteil auf, daß bedingt durch die konstruktive Anordnung der Ventile sowie die für eine Montage und Demontage erforderlichen Zugangsbereiche eine räumlich möglichst kompakte Anordnung der Blasstationen nicht in ausreichender Weise ermöglicht wird. Eine kompakte Anordnung der Blasstation wird insbesondere bei Blasmaschinen angestrebt, bei denen die Blasstationen auf einem rotierenden Blasrad angeordnet sind. Ein zu gro-ßer Abstand der Blasstationen führt zu großen Durchmessern der Blasräder und hiermit zu einer vergrößerten Masseträgheit, die Bremsvorgänge sowie Beschleunigungsvorgänge verlängert.

Aus der US 2003/118,686 A1 ist eine Vorrichtung zur Blasformung von Behältern bekannt, die einen Ventilblock mit Ventilen zur gesteuerten Blasdruckzuführung aufweist. Die Ventile sind außenseitig am Ventilblock angeflanscht.

In der EP 1 293 329 A1 wird eine Reckstange für Blasstationen mit pneumatisch gesteuerter Kupplung beschrieben. Bei einer Beaufschlagung der Kupplung mit einem pneumatischen Steuerdruck wird die Reckstange von einem kurvengesteuerten Trägersockel entkoppelt und Bewegungen des Trägersockels werden nicht mehr auf die Reckstange übertragen.

Die EP 0 333 096 A2 zeigt ein Steuerventil im Bereich der Einspritzanlage eines Antriebsaggregates, bei der das Ventil innerhalb eines Ventilträgers angeordnet ist.

Aufgabe der vorliegenden Erfindung ist es, eine Vorrichtung der einleitend genannten Art derart zu konstruieren, daß eine Anordnung von Blasstationen nebeneinander mit geringem Abstand unterstützt wird.

Diese Aufgabe wird nach dem kennzeichnenden Teil des Anspruchs 1 gelöst.

Die Anordnung des Ventilträgers im Bereich der Grundplatte derart, daß das Zusammenfügen und Trennen im wesentlichen parallel zur Trennebene der Blasform durchführbar ist, ermöglicht es, die Montage- und Demontagevorgänge ausschließlich von vorne durchzuführen. Es sind somit keinerlei Montagefreiräume neben den Blasstationen erforderlich. Die Blasstationen können hierdurch derart dicht nebeneinander angeordnet werden, daß lediglich die Öffnungs- und Schließbewegungen der Blasstationen funktionsgerecht durchführbar sind.

Das Anschlußelement kann den Innenraum des Vorformlings direkt oder in Reihe mit weiteren Strömungselementen mit den Ventilen verbinden.

Ein typisches Anwendungsgebiet wird dadurch definiert, daß das Ventil als ein Hochdruckventil ausgebildet ist.

Insbesondere ist daran gedacht, daß das Ventil zur Schaltung eines Druckes von etwa 40 bar ausgebildet ist.

Bei einer mehrstufigen Blasdruckversorgung erweist es sich als vorteilhaft, daß das Ventil zur Schaltung eines Druckes im Bereich von etwa 4 bar bis 20 bar ausgebildet ist.

Ebenfalls trägt es zu einem kompakten Aufbau der Anordnung bei, daß das Ventil als ein Entlüftungsventil ausgebildet ist.

Eine hohe mechanische Stabilität kann dadurch erreicht werden, daß die Grundplatte im Bereich eines Stationsständers der Blasstation fixiert ist.

Zur Erleichterung einer Fertigung von erforderlichen Verbindungskanälen wird vorgeschlagen, daß die Grundplatte aus einer Sockelplatte und einer ventilaufnahmeplatte ausgebildet ist, die relativ zueinander abgedichtet angeordnet sind.

Ein übersichtlicher Aufbau bei gleichzeitig einfacher Strömungsführung wird dadurch erreicht, daß auf beiden Seiten des Anschlußelementes mindestens ein Ventil angeordnet ist.

Bei komplexen pneumatischen Steuerungen erweist es sich als vorteilhaft, daß mindestens zwei Ventile übereinander angeordnet sind.

Die erforderlichen pneumatischen Anschlüsse können dadurch bereitgestellt werden, daß die Sockelplatte Verbindungsbohrungen zum Anschluß an im Bereich des Stationsständers verlaufende Anschlußkanäle aufweist.

Ein einfacher Anschluß der Funktionskomponenten wird dadurch erleichtert, daß die Ventilaufnahmeplatte Verbindungsbohrungen zum Anschluß sowohl an die Ventile als auch an das Anschlußelement aufweist.

Eine vereinfachte Fertigung kann dadurch erreicht werden, daß im Bereich einer der Ventilaufnahmeplatte zugewandten Begrenzung der Sockelplatte Strömungskanäle angeordnet sind.

Alternativ ist es auch möglich, daß im Bereich einer der Sockelplatte zugewandten Begrenzung der ventilaufnahmeplatte Strömungskanäle angeordnet sind.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Draufsicht auf zwei jeweils neben einem Anschlußelement angeordnete Ventilträger, die von einer Grundplatte im Bereich eines Ständers einer Blasstation positioniert werden,
- Fig. 6: die Anordnung gemäß Fig. 5 in einem teilweisen auseinandergenommenen Zustand und
- Fig. 7: eine Seitenansicht gemäß Blickrichtung VII in Fig. 6.

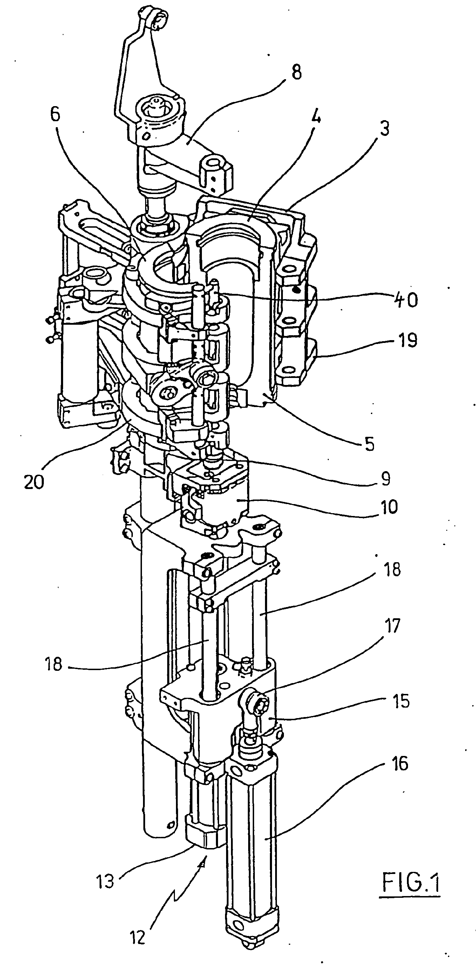

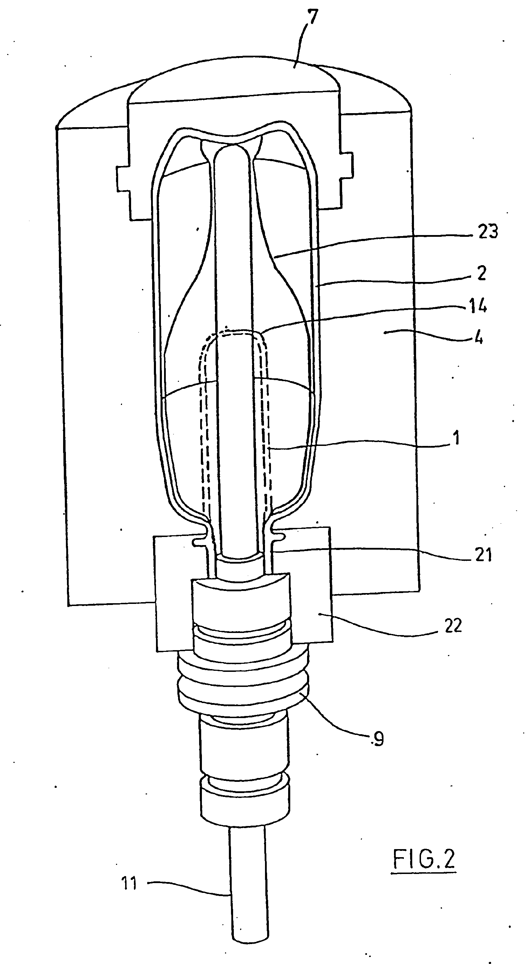

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den vorformling (1) und schematisch eine sich entwickelnde Behälterblase (23).

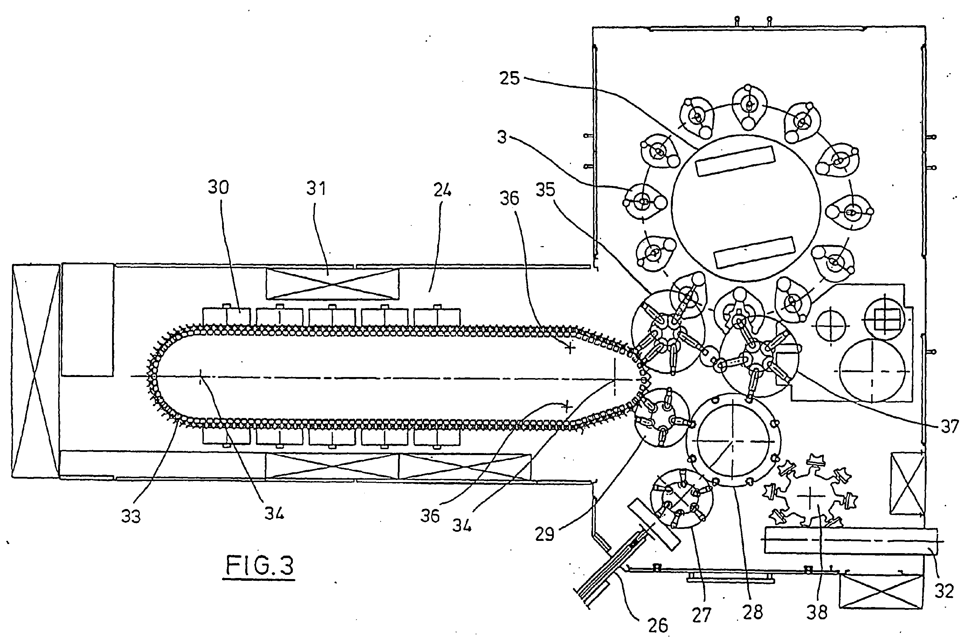

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

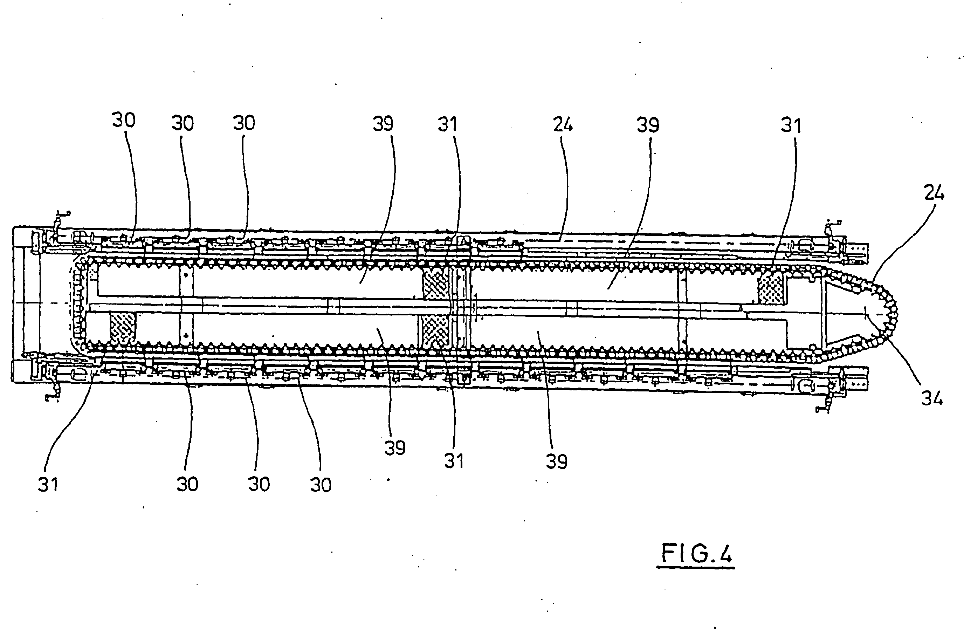

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

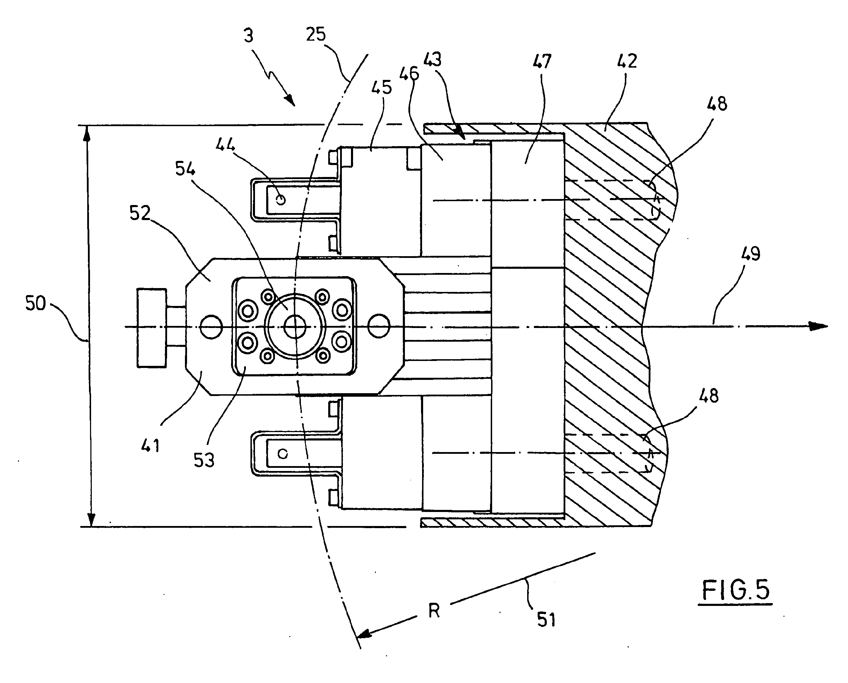

Fig. 5 zeigt einen Horizontalschnitt durch die Blasstation (3) oberhalb eines Anschlußelementes (41), das beispielsweise als der in Fig. 1 dargestellte Anschlußkolben (10) ausgebildet sein kann. Das Anschlußelement (41) dient dazu, Druckluft in Richtung auf einen Innenraum des Vorformlings (1) zuleiten, um diesen in den Behälter (2) zu verformen. Nach einer Ausformung des Behälters (2) wird die Druckluft über das Anschlußelement (41) wieder abgelassen. Darüber hinaus dient das Anschlußelement (41) zu einer Führung der Reckstange (11).

Bei der in Fig. 5 dargestellten Ausführungsform weist die Blasstation (3) einen Stationsständer (42) auf, an dem unter anderem die Formträger (19, 20) beweglich gelagert sind. Darüber hinaus ist im Bereich des Stationsständers (42) eine Grundplatte (43) befestigt, die mit Ventilen (44) versehene Ventilträger (45) fixiert. Zur Erleichterung einer Fertigung von innerhalb der Grundplatte (43) verlaufenden Strömungskanälen ist die Grundplatte (43) zweiteilig ausgebildet und besteht aus einer ventilaufnahmeplatte (46) sowie einer Sockelplatte (47).

Im Bereich von einander zugewandten Begrenzungen der Ventilaufnahmeplatte (46) und der Sockelplatte (47) können fertigungstechnisch relativ einfach die erforderlichen Strömungskanäle hergestellt werden. Nach einem abgedichteten zusammenfügen der Ventilaufnahmeplatte (46) und der Sockelplatte (47) sind die Strömungskanäle sowohl gegeneinander als auch gegenüber einer Umgebung im wesentlichen gasdicht.

Durch den Stationsständer (42) hindurch verlaufen Anschlußkanäle (48) zur Verbindung der Grundplatte (43) mit einer Druckluftversorgung bzw. einem Schalldämpfer zur Druckluftableitung. Im Bereich der Sockelplatte (45) sind Verbindungsbohrungen angeordnet, die die Anschlußkanäle (48) in die bereits erwähnten Strömungskanäle überleiten. Weitere Verbindungsbohrungen sind im Bereich der ventilaufnahmeplatte (46) angeordnet, um die Strömungskanäle mit den zugehörigen Arbeitsräumen der Ventile (44) zu verbinden. Über weitere entsprechende verbindungsbohrungen sowie Strömungskanäle innerhalb der Grundplatte (43) erfolgt auch ein Anschluß der Ventile (44) an das Anschlußelement (41).

Die Sockelplatte (47), die Ventilaufnahmeplatte (46) sowie die Ventilträger (45) sind derart montiert, daß eine Montage und Demontage mit Bewegungsrichtungen im wesentlichen parallel zu einer Mittelebene (49) erfolgen können. Bei einer Anordnung der Blasstation (3) auf einem rotierenden Blasrad (24) ist die Mittelebene (49) bezüglich einer Rotationsachse des Blasrades (45) in einer radialen Richtung angeordnet.

Die Anordnung der Ventilträger (45) erfolgt darüber hinaus derart, daß eine Montage sowie Demontage am Anschlußelement (41) vorbei erfolgen kann. Die erläuterte Anordnung führt dazu, daß eine Montagebreite (50) sehr gering dimensioniert werden kann. Eine Mehrzahl von Blasstationen (3) können hierdurch sehr eng relativ zueinander benachbart angeordnet werden. Dies führt bei einer Anordnung der Blasstation (3) auf einem Blasrad (25) dazu, daß eine vorgegebene Anzahl von Blasstationen (3) auf einem Blasrad (25) mit einem geringen Radius (51) angeordnet werden können.

Das Anschlußelement (41) besteht beim dargestellten Ausführungsbeispiel aus einem Gehäuse (52), das unbeweglich mit dem Stationsständer (42) verbunden ist und einem beweglich innerhalb des Gehäuses (42) geführten Anschlußkolben (53). Eine Zuleitung und Ableitung der Druckluft sowie eine Führung der Reckstange (11) erfolgt durch eine Zentralöffnung (54) des Anschlußkolbens (53) hindurch.

Hinsichtlich der konstruktiven Realisierung der Ventilaufnahmeplatte (46) und der Sockelplatte (47) bestehen mehrere Ausführungsvarianten. Grundsätzlich ist es möglich, im Bereich beider Platten (46, 47) Teile der Strömungskanäle auszuformen. Darüber hinaus ist es auch möglich, die Kanäle lediglich im Bereich einer der Platten (47, 48) auszuformen und die andere der Platten (47, 48) als Dichtplatte zu verwenden.

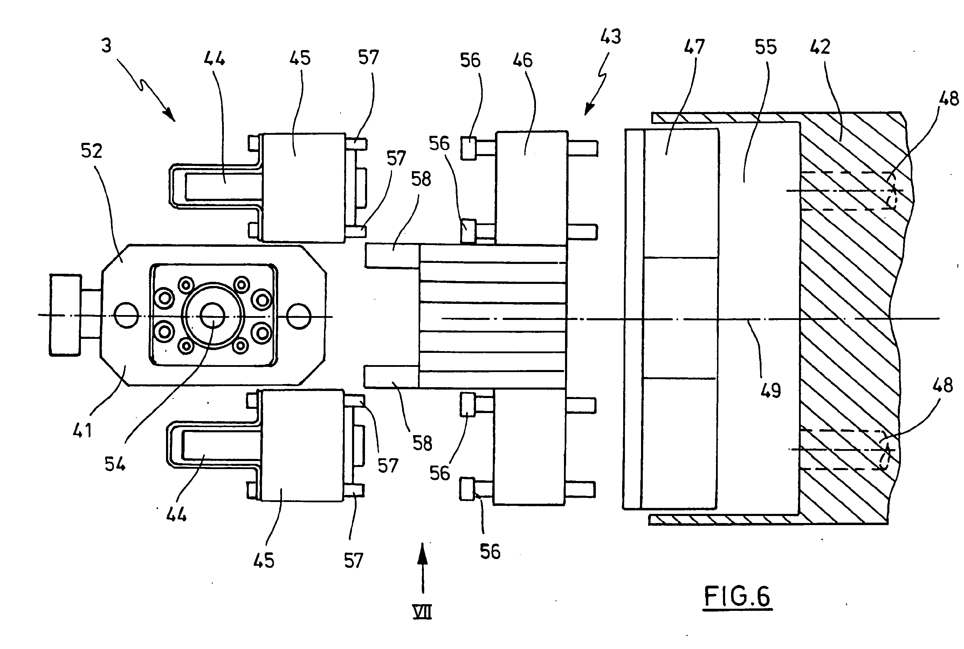

Fig. 6 zeigt die Anordnung gemäß Fig. 5 in einem teilweise demontierten Zustand. Es ist zu erkennen, daß im Bereich des Stationsständers (42) eine Aufnahmetasche (55) für die Sockelplatte (47) angeordnet ist. Gemäß dem dargestellten Ausführungsbeispiel wird die Sockelplatte (47) lose in die Aufnahmetasche (55) eingesetzt und anschließend gemeinsam mit der Ventilaufnahmeplatte (46) über Schraubenbolzen (56) innerhalb der Aufnahmetasche (55) fixiert. Anschließend werden die Ventilträger (45) über Schraubenbolzen (57) auf der Ventilaufnahmeplatte (46) fixiert. Zur Befestigung des Gehäuses (52) ist die Ventilaufnahmeplatte (46) mit Halterungselementen (58) versehen, die insbesondere eine korrekte Ausrichtung des Gehäuses (52) unterstützen.

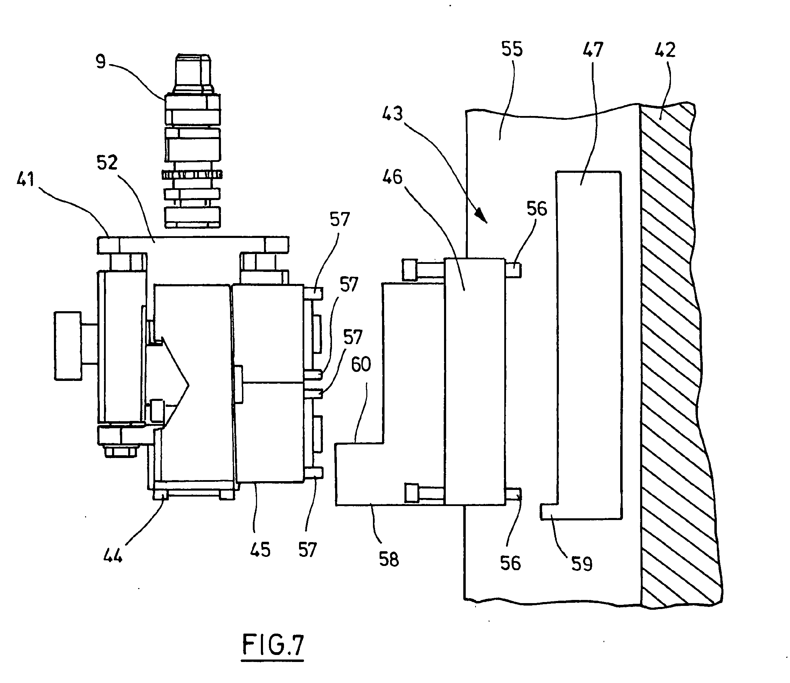

Fig. 7 zeigt eine Seitenansicht der teilweise demontierten Anordnung gemäß Fig. 6 in einem teilweise geschnittenen Zustand. Zu erkennen ist insbesondere, daß die Sockelplatte (47) einen Anschlag (59) zur Unterstützung einer Positionierung der Ventilaufnahmeplatte (46) aufweist und daß das Halterungselement (58) einen Anschlag (60) zur Unterstützung einer Positionierung des Gehäuses (52) aufweist. Eingezeichnet ist bei der Ausführungsform gemäß Fig. 7 zusätzlich ein Transportdorn (9), der gemäß einer Ausführungsform der Erfindung zum Transport der Vorformlinge (1) sowie der Behälter (2) dienen kann. Der Anschlußkolben wird bei dieser Ausführungsform gegen eine in lotrechter Richtung untere Dichtfläche des Transportdorns (9) geführt und eine Druckbeaufschlagung des Innenraumes der Vorformlinge (1) erfolgt durch einen Innenraum des Transportdorns (9) hindurch.

## Patentansprüche

1. Vorrichtung zur Blasformung von Behältern, die auf einem rotierenden Blasrad eine Mehrzahl von relativ zu einander eng benachbarten Blasstationen mit jeder einen Blasform aufweist, in die ein zu einem Behälter umformbarer Vorformling einsetzbar ist sowie die mit mindestens einem Ventil zur Steuerung einer Druckluftströmung sowie einem Anschlußelement zur Verbindung eines Innenraumes der umzuformenden Vorformlinge mit dem Ventil aufweist, **dadurch gekennzeichnet, daß** das Ventil (44) in einem Ventilträger (45) mindestens bereichsweise angeordnet ist und daß der Ventilträger (45) neben dem Anschlußelement (41) positioniert und derart von einer mit Strömungskanälen versehenen Grundplatte (43) gehaltert ist, daß ein Zusammenfügen und Trennen von Ventilträger (45) und Grundplatte (43) im wesentlichen parallel zu einer Trennebene der Blasform von vorne durchführbar ist, wobei die Grundplatte (43) aus einer Sockelplatte (47) und einer Ventilaufnahmeplatte (46) ausgebildet ist, die relativ zueinander abgedichtet angeordnet sind.

2. Vorrichtung nach Anspruch 1, **dadurch gekennzeichnet, daß** das mindestens eine Ventil (44) als ein Ventil zur Schaltung eines Hochdruckes von mindestens 4 bar ausgebildet ist.

3. Vorrichtung nach Anspruch 1 oder 2, **dadurch gekennzeichnet, daß** das mindestens eine Ventil (44) zur Schaltung eines Druckes von etwa 40 bar ausgebildet ist.

4. Vorrichtung nach Anspruch 1 oder 2, **dadurch gekennzeichnet, daß** das mindestens ein Ventil (44) zur Schaltung eines Druckes im Bereich von etwa 4 bar bis 20 bar ausgebildet ist.

5. Vorrichtung nach Anspruch 1, **dadurch gekennzeichnet, daß** das mindestens eine Ventil (44) als ein Entlüftungsventil ausgebildet ist.

6. Vorrichtung nach einem der Ansprüche 1 bis 5, **dadurch gekennzeichnet, daß** die Grundplatte (43) im Bereich eines Stationsständers (42) der Blasstation (3) fixiert ist.

7. Vorrichtung nach einem der Ansprüche 1 bis 6, **dadurch gekennzeichnet, daß** auf beiden Seiten des Anschlußelementes (41) mindestens ein Ventil (44) angeordnet ist.

8. Vorrichtung nach einem der Ansprüche 1 bis 7, **dadurch gekennzeichnet, daß** mindestens zwei Ventile (44) übereinander angeordnet sind.

9. Vorrichtung nach einem der Ansprüche 1 bis 8, **dadurch gekennzeichnet, daß** die Sockelplatte (47) Verbindungsbohrungen zum Anschluß an im Bereich des Stationsständers (42) verlaufende Anschlußkanäle (48) aufweist.

10. Vorrichtung nach einem der Ansprüche 1 bis 9, **dadurch gekennzeichnet, daß** die Ventilaufnahmeplatte (46) Verbindungsbohrungen zum Anschluß sowohl an die Ventile (44) als auch an das Anschlußelement (41) aufweist.

11. Vorrichtung nach einem der Ansprüche 1 bis 10, **dadurch gekennzeichnet, daß** im Bereich einer der Ventilaufnahmeplatte (46) zugewandten Begrenzung der Sockelplatte (47) Strömungskanäle angeordnet sind.

12. Vorrichtung nach einem der Ansprüche 1 bis 10, **dadurch gekennzeichnet, daß** im Bereich einer der Sockelplatte (47) zugewandten Begrenzung der Ventilaufnahmeplatte (46) Strömungskanäle angeordnet sind.

## Claims

1. Device for blow-moulding containers, comprising a plurality of blowing stations disposed adjacent to one another relatively closely on a rotating blowing carousel, each with a blow mould, in which a preform to be moulded into a container can be inserted, which has at least one valve for controlling a flow of compressed air and a connector element for connecting an interior of the preform to be moulded to the valve, **characterised in that** at least certain regions of the valve (44) are disposed in a valve holder (45) and the valve holder (45) is positioned adjacent to the connector element (41) and retained by means of a bed plate (43) provided with flow passages so that the valve holder (45) and bed plate (43) can be assembled and taken apart essentially parallel with a dividing plane of the blow mould from the front, and the bed plate (43) comprises a base plate (47) and a valve mounting plate (46) disposed so that they are sealed off from one another.

2. Device as claimed in claim 1, **characterised in that** the at least one valve (44) is a valve designed to apply a high pressure of at least 4 bar.

3. Device as claimed in claim 1 or 2, **characterised in that** the at least one valve (44) is a valve designed to apply a pressure of approximately 40 bar.

4. Device as claimed in claim 1 or 2, **characterised in that** the at least one valve (44) is a valve designed to apply a pressure in the range of approximately 4 bar to 20 bar.

5. Device as claimed in claim 1, **characterised in that** the at least one valve (44) is provided in the form of a venting valve.

6. Device as claimed in one of claims 1 to 5, **characterised in that** the bed plate (43) is secured in the region of a station stand (42) of the blowing station (3).

7. Device as claimed in one of claims 1 to 6, **characterised in that** at least one valve (44) is disposed on both sides of the connector element (41).

8. Device as claimed in one of claims 1 to 7, **characterised in that** at least two valves (44) are disposed one above the other.

9. Device as claimed in one of claims 1 to 8, **characterised in that** the base plate (47) has connecting bores for connecting to connection passages (48) extending in the region of the station stand (42) .

10. Device as claimed in one of claims 1 to 9, **characterised in that** the valve mounting plate (46) has connecting bores for connecting both to the valves (44) and to the connector element (41).

11. Device as claimed in one of claims 1 to 10, **characterised in that** flow passages are disposed in the region of a boundary of the base plate (47) facing the valve mounting plate (46).

12. Device as claimed in one of claims 1 to 10, **characterised in that** flow passages are disposed in the region of a boundary of the valve mounting plate (46) facing the base plate (47).

## Revendications

1. Dispositif pour soufflage de récipients, qui présente, sur une tourelle rotative, plusieurs postes de soufflage voisins, serrés les uns par rapport aux autres, équipés chacun d'un moule de soufflage dans lequel est placé une préforme pour former un récipient, et qui présente aussi au moins une soupape pour la commande d'un flux d'air comprimé, ainsi qu'un élément de raccordement pour raccorder à ladite soupape un espace interne de la préforme à souffler, **caractérisé en ce que** la soupape (44) est agencée, au moins par sections, dans un porte-soupape (45), et que ledit porte-soupape (45) est positionné à côté de l'élément de raccordement (41) et est maintenu par une plaque de base (43), pourvue de canaux d'écoulement, de telle manière qu'un assemblage et une séparation du porte-soupape (45) et de la plaque de base (43) peuvent être effectués essentiellement par l'avant, parallèlement à un plan de séparation du moule de soufflage, la plaque de base (43) étant composée d'un socle (47) et d'une plaque de réception de la soupape (46) qui sont agencés de manière étanche l'un par rapport à l'autre.

2. Dispositif selon la revendication 1, **caractérisé en ce que** une soupape (44) au moins est conçue en tant que soupape pour le branchement d'une haute pression d'au moins 4 bars.

3. Dispositif selon revendication 1 ou 2, **caractérisé en ce que** la soupape (44) au moins prévue est conçue pour le branchement d'une pression d'au moins 40 bars.

4. Dispositif selon revendication 1 ou 2, **caractérisé en ce que** la soupape (44) au moins prévue est conçue pour le branchement d'une pression située dans une plage de 4 bars à 20 bars.

5. Dispositif selon la revendication 1, **caractérisé en ce que** la soupape (44) au moins prévue est conçue en tant que soupape de ventilation.

6. Dispositif selon l'une des revendications 1 à 5, **caractérisé en ce que** la plaque de base (4) est fixée dans la zone d'un support de poste (42) du poste de soufflage (3).

7. Dispositif selon l'une des revendications 1 à 6, **caractérisé en ce que**, sur les deux côtés de l'élément de raccordement (41), est agencée au moins une soupape (44).

8. Dispositif selon l'une des revendications 1 à 7, **caractérisé en ce que** deux soupapes (44) au moins sont agencées l'une au-dessus de l'autre.

9. Dispositif selon l'une des revendications 1 à 8, **caractérisé en ce que** le socle (47) présente des alésages d'assemblage pour le raccordement à des canaux de raccordement (48) qui s'étendent dans la région du support de poste (42).

10. Dispositif selon l'une des revendications 1 à 9, **caractérisé en ce que** la plaque de réception de soupape (46) présente des alésages d'assemblage pour le raccordement aux soupapes (44) ainsi qu'à l'élément de raccordement (41).

11. Dispositif selon l'une des revendications 1 à 10, **caractérisé en ce que**, dans la zone d'une limitation du socle (47), orientée vers la plaque de réception de soupape (46), des canaux d'écoulement sont agencés.

12. Dispositif selon l'une des revendications 1 à 10, **caractérisé en ce que**, dans la zone d'une limitation de la plaque de réception de soupape (46), orientée vers le socle, (47) des canaux d'écoulement sont agencés.
